# EUROPEAN PATENT SPECIFICATION

(11) **EP 2 615 707 B1**
(45) Date of publication and mention of the grant of the patent: **15.10.2014**
(21) Application number: 12195964.7
(22) Date of filing: 06.12.2012
(51) Int. Cl.: H02G 3/12, H02G 3/14

(54) **Pouring workbox.**
Giessdose.
Boîte de coulée.

(30) Priority: 11.01.2012 NL 2008104
(43) Date of publication of application: 17.07.2013
(73) Proprietor: ABB B.V., 6716 AA Ede (NL)
(72) Inventor: Renckens, Thomas Philippus, 3742 ND Baarn (NL)
(74) Representative: Geurts, Franciscus Antonius

(56) References cited:
- FR-A- 1 419 864
- FR-A1- 2 660 954

## Description

### BACKGROUND OF THE INVENTION

The invention relates to a pouring work box to be used in pouring work.

In pouring work wall sections or ceiling sections are formed by means of pouring concrete between shuttering walls or into a tray of shuttering walls. Prior to pouring, the pouring work boxes and pipes that connect the pouring work boxes to each other are disposed between the shuttering walls. During pouring the concrete, space can in that way be kept open in the concrete for disposing electric installation material. Known pouring work boxes comprise a housing with a bottom wall and a circumferential wall that jointly define an installation space for installation material. The circumferential wall is provided with an installation edge bounding a primary opening of the housing. The known pouring work boxes comprise a lid that fits in a clamping manner within the circumferential wall of the housing and closes off the primary opening of the housing. Disposing the known pouring work boxes between the shuttering walls comprises the following steps. The lid is secured against one of the shuttering walls using screws, glue or pins. The housing is slid onto the lid, wherein the installation edge faces the shuttering wall, so that after removal of the shuttering wall the installation material can be secured onto the installation edge. Subsequently concrete can be poured.

During pouring the concrete the flow of concrete exerts forces on the housing. The clamping force between the housing and the lid is not always sufficient to prevent that the housing slides from the lid resulting in the installation space of the housing being flooded with concrete or that the housing is taken along in the flow of concrete.

It is an object of the invention to provide a pouring work box that can reliably be secured onto a shuttering wall.

### SUMMARY OF THE INVENTION

According to a first aspect the invention provides a pouring work box for building up electric wiring, comprising a housing and a lid which in the placed condition connects to the housing, wherein the housing comprises a bottom wall and a circumferential wall that is upright from the bottom wall and has a box centre line, wherein the bottom wall and the circumferential wall jointly bound an installation space for accommodation of installation material, wherein the circumferential wall comprises a circular installation edge that faces away from the bottom wall and bounds a primary opening of the housing, wherein the lid is shaped complementary to the primary opening and substantially fully closes off the primary opening when in the placed condition, wherein the pouring work box is provided with a first locking member which with respect to the housing can be moved between a first position and a second position, wherein the first locking member in the first position allows a translating application motion of the housing with respect to the lid parallel to the box centre line and wherein the first locking member in the second position couples the housing to the lid and secures the housing with respect to the lid against translation parallel to the box centre line.

The coupling between the housing and the lid is able to counteract that during the pouring of concrete the housing gets detached from the lid as a result of the forces the flow of concrete exerts on the housing. In that way it can be prevented that the installation space of the housing is flooded with concrete or that the housing is taken along in the flow of concrete.

In one embodiment the motion of the first locking member between the first position and the second position is a rotary motion. Due to the rotary motion the first locking member can rotate just like around a hinge and engage onto the lid.

In one embodiment the rotation centre line of the rotary motion extends parallel to the bottom wall of the housing. As a result the first locking member can rotate between the first position parallel to the bottom wall and the second position parallel to the circumferential wall.

In one embodiment the rotary motion is accomplished by a rotary connection situated in the rotation centre line. The rotary connection is able to couple the first locking member to the lid or the housing and allow a rotary motion with respect thereto.

In one embodiment the rotary connection is a flexible plastic connection, preferably a living hinge. By using a flexible plastic connection the first locking member can be integrally formed to the lid or the housing.

In one embodiment the rotary connection connects the housing and the first locking member to each other.

In one embodiment the first locking member is connected to the housing by the rotary connection at the outside of the circumferential wall. The first locking member is able to rotate with respect to the housing and in the second position couples the housing to the lid.

In one embodiment the first locking member in the first position is spaced apart from the lid. The distance between the first locking member and the lid can allow the movement of the housing with respect to the lid in a translation parallel to the box centre line.

In one embodiment the lid is provided with a first locking lip, wherein the first locking member is provided with a first locking opening which in the second position of the first locking member accommodates the first locking lip. The accommodation of the first locking lip in the first locking opening of the first locking member can effect a locking between the first locking member and the first locking lip.

In one embodiment, considered parallel to the box centre line, the first locking lip extends beyond the circumference of the circumferential wall. The first locking member is thus able to engage onto the first locking lip beyond the circumference of the circumferential wall.

In one embodiment, considered parallel to the box centre line, the first locking opening confines the first locking lip. By confining the first locking lip a translation of the housing with respect to the lid parallel to the box centre line can be counteracted.

In one embodiment the first locking lip is provided with a first locking cam which, considered from the circumferential wall, in the second position of the first locking member hooks behind the first locking member. The first locking cam can counteract the return of the first locking member from the second position to the first position, in which way it can be prevented that the coupling between the lid and the housing inadvertently gets detached.

In one embodiment, when the housing is coupled to the lid by the first locking member, the lid substantially closes off the primary opening of the housing. In that way it can be counteracted that during pouring, concrete penetrates into the installation space of the housing.

In one embodiment the pouring work box is provided with a predetermined break connection at the location of the coupling between the housing and the lid. The predetermined break connection can allow the coupling between the housing and the lid to be ended when exerting sufficient force in the translation direction, so that the housing and the lid are able to move with respect to each other in a translation direction parallel to the box centre line.

In one embodiment the pouring work box is provided with a second locking member having the same characteristics as the first locking member, wherein with respect to the circumferential wall the second locking member is situated diametrically across the first locking member. The second locking member can accomplish an additional, second coupling between the lid and the housing, in which way the certainty of the housing and lid remaining coupled to each other during the pouring of concrete can be increased.

In one embodiment the lid is provided with a second locking lip having the same characteristics as the first locking lip, wherein with respect to the circumferential wall the second locking lip is situated diametrically across the first locking lip. Due to the presence of the second locking lip the second locking member can be locked with the second locking lip in the same manner as the locking between the first locking member and the first locking lip.

In one embodiment the lid is provided with fastening locations for securing the lid to a shuttering wall. Because the lid can be secured to the shuttering wall, the position of the lid and the housing coupled thereto can be defined.

According to a second aspect the invention provides a method for accommodating a pouring work box in a pouring work wall, pouring work floor or a pouring work ceiling for building up electric wiring, wherein the pouring work box comprises a housing and a lid which in the placed condition connects to the housing, wherein the housing comprises a bottom wall and a circumferential wall that is upright from the bottom wall and has a box centre line, wherein the bottom wall and the circumferential wall jointly bound an installation space for accommodation of installation material, wherein the circumferential wall comprises a circular installation edge that faces away from the bottom wall and bounds a primary opening of the housing, wherein the lid is shaped complementary to the primary opening and substantially fully closes off the primary opening when in the placed condition, wherein the pouring work box is provided with a first locking member which with respect to the housing can be moved between a first position and a second position, wherein the first locking member in the first position allows a translating application motion of the housing with respect to the lid parallel to the box centre line and wherein the first locking member in the second position couples the housing to the lid and secures the housing with respect to the lid against translation parallel to the box centre line, wherein the method comprises the steps of placing shuttering walls for forming a pouring mould for the pouring work wall, the pouring work floor or the pouring work ceiling, securing the lid against one of the shuttering walls, placing the housing on the lid in a direction parallel to the box centre line so as to connect, rotating the first locking member from the first position into the second position and thus accomplishing the coupling between the housing and the lid and pouring the concrete.

The coupling between the housing and the lid can counteract that during the pouring of concrete the housing gets detached from the lid as a result of the forces the flow of concrete exerts on the housing. In that way it can be prevented that the installation space of the housing is flooded with concrete or that the housing is taken along in the flow of concrete.

In one embodiment the pouring work box is provided with a second locking member having the same characteristics as the first locking member, wherein with respect to the circumferential wall the second locking member is situated diametrically across the first locking member, wherein the method prior to the step of pouring the concrete furthermore comprises the step of rotating the second locking member from the first position into the second position and thus accomplishing an additional coupling between the housing and the lid. The additional second coupling between the lid and the housing can increase the certainty of the housing and the lid remaining coupled to each other during the pouring of concrete.

In one embodiment the pouring work box is provided with a predetermined break connection at the location of the coupling between the housing and the lid, wherein the method furthermore comprises the steps of removing the shuttering walls, exerting sufficient force on the predetermined break connection in order to break it, wherein the coupling between the housing and the lid is ended, and the removal of the lid. By removing the lid the installation space of the housing is released and installation material can be arranged in it.

The French patent publication FR 2 660954 A1, which is considered as background art, discloses a pouring work box comprising a support housing for fixing on a shuttering wall and on which a housing can be fitted.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached schematic drawings, in which:
figure 1 shows an isometric view of a pouring work box with a housing and a lid according to an embodiment of the invention;
figure 2 shows a view in cross-section of the pouring work box according to the line II-II in figure 1, wherein the housing has been slid onto the lid; and
figure 3 shows a view in cross-section of the pouring work box according to figure 2, wherein the housing and the lid have been coupled to each other.

### DETAILED DESCRIPTION OF THE DRAWINGS

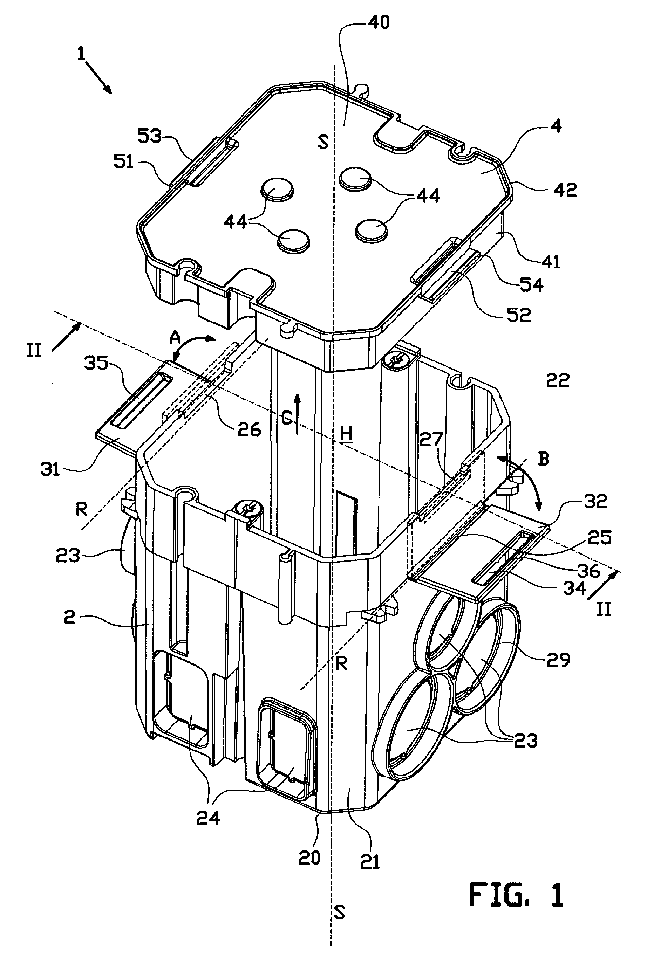

Figures 1-3 show a concrete box or pouring work box 1 to be used in pouring work according to an embodiment of the invention. The pouring work box 1 comprises a housing 2 and a lid 4 that in the placed condition closes off the housing 2. The housing 2 and the lid 4 are manufactured by means of injection moulding a suitable plastic, for instance polypropylene. In a manner to be further described the lid 4 is adapted to be arranged on a shuttering wall with the side that faces away from the housing 2.

The housing 2 comprises a substantially square bottom wall 20 and a circumferential wall 21 that is upright from the bottom wall 20 and has a box centre line S. The bottom wall 20 and the circumferential wall 21 jointly bound an installation space H. The circumferential wall 21 has a circular installation edge 22 that faces away from the bottom wall 20 and that defines a primary opening of the housing 2. On two straight sides of the circumferential wall 21 that are diametrically across each other, the installation edge 22 is provided with recesses 26, 27 for accommodating the lid 4 therein in a manner to be further described. The housing 2 further comprises two groups of break-through partitions 23 of a circular shape for accommodation of rigid plastic installation pipes, serrated flexible installation pipes or ducts, none of which are shown, for passing electric wiring through to the installation space H and two groups of rectangular break-through partitions 24 for coupling juxtaposed pouring work boxes 1 to each other. After breaking through the break-through partitions 23 of a circular shape a locking edge 29 is left in the created opening behind which edge the serrations or ribs of a serrated installation pipe can be locked.

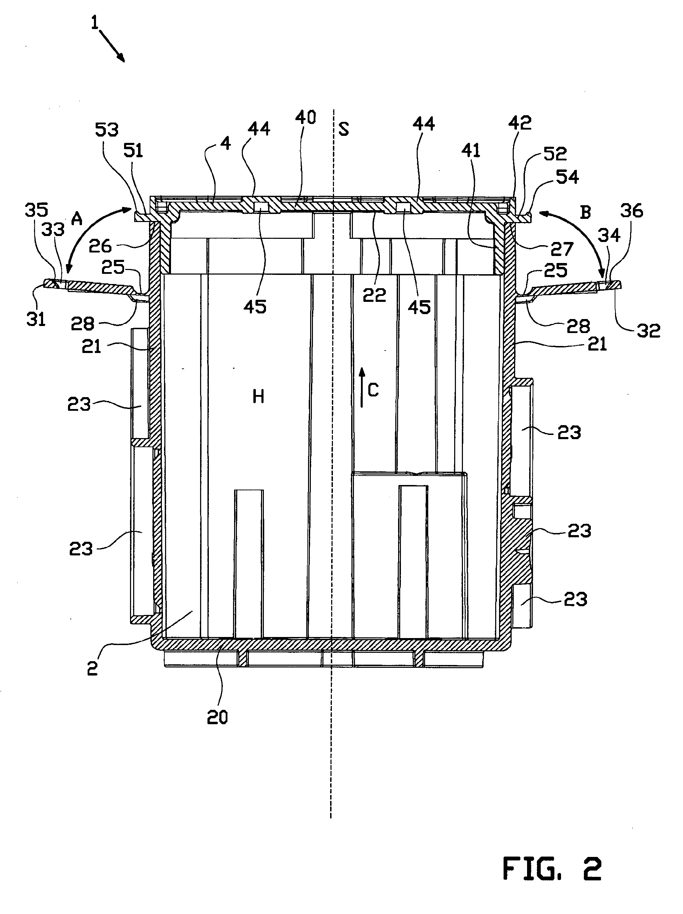

The housing 2 is furthermore provided with a rigid first locking member 31 and a rigid second locking member 32 having a substantially rectangular, plate-shaped main surface. The first locking member 31 and the second locking member 32 in the main surface comprise a first locking opening 33 and a second locking opening 34, respectively. The locking openings 33, 34 are formed like narrow, rectangular slots, which considered in the longitudinal direction, extend parallel to the nearby circumferential wall 21. On the sides situated farthest from the circumferential wall 21 in figures 1 and 2, the first locking opening 33 and the second locking opening 34 are bounded by a first inclined run-on surface 35 and a second inclined run-on surface 36, respectively.

Via rotary connections in the form of living hinges 25, the locking members 31, 32 are integrally formed on two straight sides of the circumferential wall 21 that are situated diametrically across each other. In this example at the location of the living hinges 25 the plastic material is so thin that the plastic material allows bending the living hinges 25 and a rotation of the locking members 31, 32 connected to the living hinge 25 several times over an angle of approximately ninety degrees. The bending takes place at each of the living hinges 25 about a centre line of rotation R that extends parallel to the bottom wall 20. It will be clear to the expert that the living hinges 25 can also be made by separate hinge members coupled to each other so as to rotate by means of a shaft. The advantage of integrally forming locking members 31, 32 is that the locking members 31, 32, the living hinges 25 and the housing 2 can be formed from one piece.

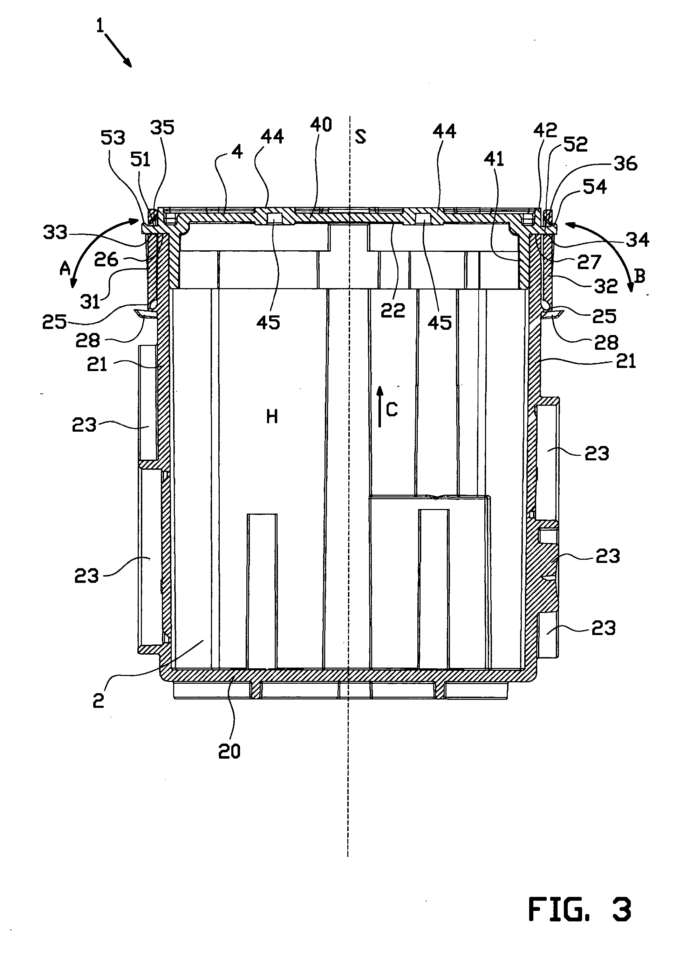

As shown in figures 2 and 3 the living hinges 25 in this example are provided with filler cams 28 at two locations, which cams are the result of filling channels arranged in the injection mould for filling the living hinges 25 during the injection moulding process. The filler cams 28 bend along with the living hinge 25 or tear off and are left behind on the housing 2.

The first locking member 31 and the second locking member 32 are rotatable in a reciprocal first direction of rotation A and a reciprocal second direction of rotation B, respectively, between a first position and a second position. In figures 1 and 2 the locking member 31, 32 are shown in the first position in which the main surface of the locking members 31, 32 extends transverse to the circumferential wall 21 and parallel to the bottom wall 20. In figure 3 the locking members 31, 32 are shown in the second position in which the main surface of the locking members 31, 32 extends parallel to the circumferential wall 21. For reasons of clarity the second position of the locking members 31, 32 is also shown with broken lines in figure 1. In the second position of the locking members 31, 32, the locking openings 33, 34 of the locking members 31, 32 are situated straight across the recesses 26, 27.

As shown in figure 1 the lid 4 is provided with a substantially square, level cover plate 40 to which a circular abutment edge 41 has been integrally formed. The lid 4 is provided with a circular cover edge 42 that projects outward with respect to the abutment wall 41. The cover plate 40 and the cover edge 42 are shaped complementary to the installation space H and the installation edge 22 of the housing 2, respectively, and fully cover them when in the placed condition. The lid 4 comprises four fastening locations 44 in the form of elevations, distributed over the cover plate 40. As shown in figure 2 at the bottom side of the cover plate 40 at the location of the fastening locations 44, the lid 4 is provided with internal centring openings 45. The internal centring openings 45 serve as an aid in arranging the screws or nails in the cover plate 40 from below, which when arranging from above will pierce through the fastening locations 44.

The lid 4 is provided with a first locking protrusion or first locking lip 51 and a second locking protrusion or second locking lip 52. The locking lips 51, 52 are integrally formed on two straight sides of the abutment wall 41 that are situated diametrically across each other, in accordance with the positions of the recesses 26, 27 and the locking members 31, 32. Considered parallel to the box centre line S the locking lips 51, 52 extend outward with respect to circumferential wall 21 and the abutment wall 41, and are designed in order to fit through the locking openings 33, 34 of the locking members 31, 32. With respect to the cover edge 42 the locking lips 51, 52 are receded in the direction of the bottom wall 20 so that locking members 31, 32 engaging about the locking lips 51, 52 do not project beyond the lid 4 in the direction of the shuttering wall. At the distal end the first locking lip 51 and the second locking lip 52 are provided with a first locking cam 53 and a second locking cam 54, respectively, that are adapted for hooking behind the locking openings 33, 34 against the locking members 31, 32.

The use of the pouring work box 1 described above in pouring work will be elucidated in the description below.

In preparation of pouring the concrete, several shuttering walls are placed at a building site or a prefab manufacturing location, none of which are shown. The shuttering walls form a mould or a tray for pouring the concrete, wherein the shape of the mould is adapted to the desired shape of the wall sections and/or ceiling sections to be formed out of concrete. Prior to pouring, pouring work boxes 1 according to the embodiment described above and pipes that are not shown that connect the pouring work boxes 1 to each other are disposed between the shuttering walls or on a shuttering wall of a tray. In that way during pouring the concrete, space can be kept open in the concrete for at a later stage of construction disposing electric installation material.

The method for disposing the pouring work box 1 on the shuttering wall comprises the following steps. First of all the lid 4 with the cover edge 42 is placed flush against the shuttering wall. The housing 2 is not yet coupled to the lid 4 at that moment. In this example at the most four screws are screwed from below into the centring openings 45 which pierce through the fastening locations 44 from below. Alternatively the lid 4 can also be glued to the shuttering wall or be secured in a hole of the shuttering wall by means of a pin projecting from the lid. The screws then pierce into the shuttering wall situated across the cover plate 40 and secure the lid 4 against the shuttering wall. Due to the elevated fastening locations 44 the cover plate 40 of the lid 4 remains substantially flush despite the connection of the fastening locations 44 against the shuttering wall. In case of a glued connection the glue can be applied on the cover plate 40 that is situated recessed with respect to the fastening locations 44, wherein the lid 4 can be placed flush against the shuttering wall, despite the presence of glue.

Figure 1 shows the situation before the housing 2 is coupled to the lid 4. In the position as shown the lid 4 is attached to the shuttering wall that is not shown. In their first position the locking members 31, 32 of the housing 2 are transverse to the circumferential wall 21 and parallel to the bottom wall 20. With respect to the lid 4 the housing 2 is aligned so that the housing 2 can be slid onto the lid 4 by means of a translating application motion in the translation direction C parallel to the box centre line S. The installation edge 22 is oriented towards the lid 4 and the shuttering wall.

Figure 2 shows the situation in which the housing 2 has been slid onto the lid 4. The abutment wall 41 is fittingly accommodated in the installation space H, wherein the abutment wall 41 preferably in abutting contact, most preferably in a clamping manner is connected to the inside of the circumferential wall 21 of the housing 2. The housing 2 is slid onto the lid 4 until the installation edge 22 has contacted the cover edge 42. After sliding the housing 2 onto the lid 4, the locking lips 51, 52 of the lid 4, have been accommodated in the recesses 26, 27. In that way the installation edge 22 of the housing 2 can be slid onto the lid 4 up to the cover edge 42, despite the presence of the locking lips 51, 52. Now that the locking lips 51, 52 are situated in the recesses 26, 27, the locking members 31, 32 can be rotated over ninety degrees from their first position transverse to the circumferential wall 21 in the directions of rotation A and B, respectively, into their second position parallel to the circumferential wall 21.

Figure 3 shows the situation in which the locking members 31, 32 have been rotated into their second position parallel to the circumferential wall 21. The first locking opening 33 and the second locking opening 34 fall over the first locking lip 51 and the second locking lip 52, respectively. The inclined run-on surfaces 35, 36 of the locking members 31, 32 guide the locking lips 51, 52 through the locking openings 33, 34. When the locking lips 51, 52 pass through the locking openings 33, 34 the locking cams 53, 54 contact run-on surfaces 35, 36 of the locking openings 33, 34, which results in resistance. By exerting extra force on the locking members 31, 32 the locking members 31, 32 and/or the locking cams 53, 54 slightly deform, so that the locking cams 53, 54 slide over the run-on surfaces 35, 36 and pass through the locking openings 33, 34. The locking cams 53, 54 then hook behind locking members 31, 32 on the side of the locking members 31, 32 that faces away from the circumferential wall 21, thus counteracting that the locking members 31, 32 return of their own accord to their first positions. Considered parallel to the box centre line S the locking openings 33, 34 confine the locking lips 51, 52 and thus lock the position of the lid 4 with respect to the housing 2 against a translation in a direction parallel to the box centre line S.

If so desired the housing 2 can be uncoupled again from the lid 4 by deforming the locking lips 51, 52 into a position in which the locking cams 53, 54 no longer stop the locking members 31, 32 from rotating back. Subsequently the locking members 31, 32 can be rotated back wherein the locking lips 51, 52 pass through the locking openings 33, 34 in the opposite direction. The coupling between the lid 4 and the housing 2 has now been ended.

In the situation as shown in figure 2, the housing 2 and the lid 4 have been coupled and the cover plate 40 and the cover edge 42 cover the installation space H and the installation edge 22, respectively. The concrete can now be poured between the shuttering walls, without the concrete penetrating the inner space H of the pouring work box 1. The locking or coupling of the locking members 31, 32 by means of locking lips 51, 52 counteracts that during the pouring of concrete the housing 2 gets detached from the lid 4 as a result of the forces the flow of concrete exerts on the housing 2. In that way it can be counteracted that the installation space H of the housing 2 is flooded with concrete or that the housing 2 is taken along in the flow of concrete. After the concrete has hardened sufficiently the shuttering walls can be removed.

When removing the shuttering walls, the shuttering wall exerts a force on the lid 4 secured thereto. In some cases, for instance when the lid 4 has been secured to the shuttering wall by means of glue, the lid 4 may get detached from the shuttering wall, as a result of which the assembly of the lid 4 and the housing 2 is left behind in the concrete in the coupled condition. In many cases however the lid 4 will be pulled along with the shuttering wall. The material of the lid 4 is more brittle than the material of the housing 2 as a result of which the lid 4 will break or tear. Although the tearing behaviour is unpredictable, it is expected that the lid 4 will break at the location of the locking lips 51, 52, resulting in the coupling between the housing 2 and the lid 4 being ended in case of sufficient force. After tearing the lid 4 is separated from the housing 2 and can be discharged together with the shuttering wall. What remains is a recess in the concrete with the housing 2 that is left behind therein. Subsequently the electric wiring can be finished with installation material such as sockets or switches that are disposed on the installation edge of the housing 2.

The above description is included to illustrate the operation of preferred embodiments of the invention and not to limit the scope of the invention. Starting from the above explanation many variations that fall within the scope of the present invention will be evident to an expert.

## Claims

1. Pouring work box (1) for building up electric wiring, comprising a housing (2) and a lid (4) which in the placed condition connects to the housing (2), wherein the housing (2) comprises a bottom wall (20) and a circumferential wall (21) that is upright from the bottom wall (20) and has a box centre line (5), wherein the bottom wall (20) and the circumferential wall (21) jointly bound an installation space (H) for accommodation of installation material, wherein the circumferential wall (21) comprises a circular installation edge (22) that faces away from the bottom wall (20) and bounds a primary opening of the housing (2), wherein the lid (4) is shaped complementary to the primary opening and substantially fully closes off the primary opening when in the placed condition, **characterized in that** the pouring work box (1) is provided with a first locking member (31) which with respect to the housing (2) can be moved between a first position and a second position, wherein the first locking member (31) in the first position allows a translating application motion the housing (2) with respect to the lid (4) parallel to the box centre line (5) and wherein the first locking member (31) in the second position couples the housing (2) to the lid (4) and secures the housing (2) with respect to the lid (4) against translation parallel to the box centre line (5).

2. Pouring work box (1) according to claim 1, wherein the motion of the first locking member (31) between the first position and the second position is a rotary motion, wherein, preferably, the rotation centre line (R) of the rotary motion extends parallel to the bottom wall (20) of the housing (2).

3. Pouring work box (1) according to claim 2, wherein the rotary motion is accomplished by a rotary connection situated in the rotation centre line (R), wherein, preferably, the rotary connection is a flexible plastic connection, preferably a living hinge (25).

4. Pouring work box (1) according to claim 3, wherein the rotary connection connects the housing (2) and the first locking member (31) to each other, wherein, preferably, the first locking member (31) is connected to the housing (2) by the rotary connection at the outside of the circumferential wall (21).

5. Pouring work box (1) according to any one of the preceding claims, wherein the first locking member (31) in the first position is spaced apart from the lid (4).

6. Pouring work box (1) according to any one of the preceding claims, wherein the lid (4) is provided with a first locking lip (51), wherein the first locking member (31) is provided with a first locking opening (33) which in the second position of the first locking member (31) accommodates the first locking lip (51), wherein, preferably, considered parallel to the box centre line (5) the first locking lip (51) extends beyond the circumference of the circumferential wall (21), wherein, preferably, considered parallel to the box centre line (5) the first locking opening (33) confines the first locking lip (51).

7. Pouring work box (1) according to claim 6, wherein the first locking lip (51) is provided with a first locking cam (53) which, considered from the circumferential wall (21), in the second position of the first locking member (31) hooks behind the first locking member (31).

8. Pouring work box (1) according to any one of the preceding claims, wherein, when the housing (2) is coupled to the lid (4) by the first locking member (31), the lid (4) substantially closes off the primary opening of the housing (2).

9. Pouring work box (1) according to any one of the preceding claims, wherein the pouring work box (1) is provided with a predetermined break connection at the location of the coupling between the housing (2) and the lid (4).

10. Pouring work box (1) according to any one of the preceding claims, wherein the pouring work box (1) is provided with a second locking member (32) having the same characteristics as the first locking member (31), wherein with respect to the circumferential wall (21) the second locking member (32) is situated diametrically across the first locking member (31).

11. Pouring work box (1) according to any one of the claims 6-9 in combination with claim 10, wherein the lid (4) is provided with a second locking lip (52) having the same characteristics as the first locking lip (51), wherein with respect to the circumferential wall (21) the second locking lip (52) is situated diametrically across the first locking lip (51).

12. Pouring work box (1) according to any one of the preceding claims, wherein the lid (4) is provided with fastening locations (44) for securing the lid (4) to a shuttering wall.

13. Method for accommodating a pouring work box (1) in a pouring work wall, pouring work floor or a pouring work ceiling for building up electric wiring, wherein the pouring work box (1) comprises a housing (2) and a lid (4) which in the placed condition connects to the housing (2), wherein the housing (2) comprises a bottom wall (20) and a circumferential wall (21) that is upright from the bottom wall (20) and has a box centre line (5), wherein the bottom wall (20) and the circumferential wall (21) jointly bound an installation space for accommodation of installation material, wherein the circumferential wall (21) comprises a circular installation edge (22) that faces away from the bottom wall (20) and bounds a primary opening of the housing (2), wherein the lid (4) is shaped complementary to the primary opening and substantially fully closes off the primary opening when in the placed condition, **characterized in that** the pouring work box (1) is provided with a first locking member (31) which with respect to the housing (2) can be moved between a first position and a second position, wherein the first locking member (31) in the first position allows a translating application motion of the housing (2) with respect to the lid (4) parallel to the box centre line (5) and wherein the first locking member (31) in the second position couples the housing (2) to the lid (4) and secures the housing (2) with respect to the lid (4) against translation parallel to the box centre line (5), wherein the method comprises the steps of placing shuttering walls for forming a pouring mould for the pouring work wall, the pouring work floor or the pouring work ceiling, securing the lid (4) against one of the shuttering walls, placing the housing (2) on the lid (4) in a direction parallel to the box centre line (5) so as to connect, rotating the first locking member (31) from the first position into the second position and thus accomplishing the coupling between the housing (2) and the lid (4) and pouring the concrete.

14. Method according to claim 13, wherein the pouring work box (1) is provided with a second locking member (32) having the same characteristics as the first locking member (31), wherein with respect to the circumferential wall (21) the second locking member (32) is situated diametrically across the first locking member (31), wherein the method prior to the step of pouring the concrete furthermore comprises the step of rotating the second locking member (32) from the first position into the second position and thus accomplishing an additional coupling between the housing (2) and the lid (4).

15. Method according to claim 13 or 14, wherein the pouring work box (1) is provided with a predetermined break connection at the location of the coupling between the housing (2) and the lid (4), wherein the method furthermore comprises the steps of removing the shuttering walls, exerting sufficient force on the predetermined break connection in order to break it, wherein the coupling between the housing (2) and the lid (4) is ended, and the removal of the lid (4).

## Patentansprüche

1. Betondose (1) zum Aufbau einer Elektroverkabelung mit einem Gehäuse (2) und einem Deckel (4), der sich im eingebauten Zustand mit dem Gehäuse (2) verbindet, wobei das Gehäuse (2) eine Bodenwand (20) und eine Umfangswand (21) aufweist, die sich senkrecht von der Bodenwand (20) erstreckt, und einer Dosenmittellinie (S), wobei die Bodenwand (20) und die Umfangswand (21) gemeinsam einen Installationsraum (H) zur Aufnahme von Installationsmaterial umschließen, wobei die Umfangswand (21) einen umlaufenden Installationsrand (22) aufweist, der von der Bodenwand (20) weg gerichtet ist und an eine Hauptöffnung des Gehäuses (2) angrenzt, wobei der Deckel (4) komplementär zu der Hauptöffnung geformt ist und die Hauptöffnung im Wesentlichen vollständig abschließt, wenn die Dose sich in einem eingebauten Zustand befindet, **dadurch gekennzeichnet, dass** die Betondose mit einem ersten Verschlusselement (31) versehen ist, das bezogen auf das Gehäuse (2) zwischen einer ersten Position und einer zweiten Position bewegt werden kann, wobei das erste Verschlusselement (31) in der ersten Position eine verschiebende Anwendungsbewegung des Gehäuses (2) bezüglich des Deckels (4) parallel zur Dosenmittellinie (S) ermöglicht, und wobei das erste Verschlusselement (31) in der zweiten Position das Gehäuse (2) mit dem Deckel (4) koppelt und das Gehäuse (2) bezüglich des Deckels (4) gegen eine Verschiebung parallel zu der Dosenmittellinie (S) sichert.

2. Betondose nach Anspruch 1, wobei die Bewegung des ersten Verschlusselements (31) zwischen der ersten Position und der zweiten Position eine Drehbewegung ist, wobei sich vorzugsweise die Drehmittellinie (R) der Drehbewegung parallel zur Bodenwand (20) des Gehäuses (2) erstreckt.

3. Betondose (1) nach Anspruch 2, wobei die Drehbewegung durch eine Drehverbindung erreicht wird, die in der Drehmittellinie (R) angeordnet ist, wobei vorzugsweise die Drehverbindung eine flexible Kunststoffverbindung ist, vorzugsweise ein Biegescharnier (25).

4. Betondose (1) nach Anspruch 3, wobei die Drehverbindung das Gehäuse (2) und des erste Verschlusselement (31) miteinander verbindet, wobei vorzugsweise das erste Verschlusselement (31) mit dem Gehäuse (2) durch die Drehverbindung auf der Außenseite der Umfangswand (21) verbunden ist.

5. Betondose (1) nach einem der vorhergehenden Ansprüche, wobei das erste Verschlusselement (31) in der ersten Position von dem Deckel (4) beabstandet ist.

6. Betondose (1) nach einem der vorhergehenden Ansprüche, wobei der Deckel (4) mit einer ersten Schließlippe (51) versehen ist, wobei das erste Verschlusselement (31) mit einer ersten Verschlussöffnung (33) versehen ist, die in der zweiten Position des ersten Verschlusselements (31) die erste Schließlippe (51) aufnimmt, wobei vorzugsweise, parallel zu der Dosenmittellinie (S) betrachtet, sich die erste Schließlippe (51) über den Umfang der Umfangswand (21) hinaus erstreckt, wobei vorzugsweise, parallel zu der Dosenmittellinie (S) betrachtet, die erste Verschlussöffnung (33) die erste Schließlippe (51) eingrenzt.

7. Betondose (1) nach Anspruch 6, wobei die erste Schließlippe (51) mit einer ersten Verschlussnocke (53) versehen ist, die, betrachtet von der Umfangswand (21), in der zweiten Position des ersten Verschlusselements (31) hinter dem ersten Verschlusselement (31) einhakt.

8. Betondose (1) nach einem der vorhergehenden Ansprüche, wobei, wenn das Gehäuse (2) mit dem Deckel (4) durch das erste Verschlusselement (31) gekoppelt ist, der Deckel (4) im Wesentlichen die Hauptöffnung des Gehäuses (2) verschließt.

9. Betondose (1) nach einem der vorhergehenden Ansprüche, wobei die Betondose (1) mit einer vorbestimmten Sollbruchverbindung an dem Ort der Kopplung zwischen dem Gehäuse (2) und dem Deckel (4) versehen ist.

10. Betondose (1) nach einem der vorhergehenden Ansprüche, wobei die Betondose (1) mit einem zweiten Verschlusselement (32) versehen ist, das dieselben Eigenschaften wie das erste Verschlusselement (31) aufweist, wobei das zweite Verschlusselement (32) bezüglich der Umfangswand (21) diametral gegenüber dem ersten Verschlusselement (31) angeordnet ist.

11. Betondose (1) nach einem der Ansprüche 6 - 9 in Verbindung mit Anspruch 10, wobei der Deckel (4) mit einer zweiten Schließlippe (52) versehen ist, die dieselben Eigenschaften wie die erste Schließlippe (51) aufweist, wobei die zweite Schließlippe (52) bezogen auf die Umfangswand (21) diametral gegenüber der ersten Schließlippe (51) angeordnet ist.

12. Betondose (1) nach einem der vorhergehenden Ansprüche, wobei der Deckel (4) mit Befestigungsort (44) zur Befestigung des Deckels (4) an einer Schalungswand versehen ist.

13. Verfahren zur Aufnahme einer Betondose (1) in einer Gießbetonwand, einem Gießbetonboden oder einer Gießbetondecke zum Aufbau einer Elektroverkabelung, wobei die Betondose (1), ein Gehäuse (2) und einen Deckel (4) aufweist, der sich in dem eingebauten Zustand mit dem Gehäuse (2) verbindet, wobei das Gehäuse (2) eine Bodenwand (20) und eine Umfangswand (21) aufweist, die sich von der Bodenwand (20) senkrecht erstreckt und eine Dosenmittellinie (S) aufweist, wobei die Bodenwand (20) und die Umfangswand (21) gemeinsam einen Installationsraum zur Aufnahme von Installationsmaterial eingrenzen, wobei die Umfangswand (21) einen umlaufenden Installationsrand (22) aufweist, der von der Bodenwand (20) weg gerichtet ist und an eine Hauptöffnung des Gehäuses (2) angrenzt, wobei der Deckel (4) komplementär zur Hauptöffnung geformt ist und im Wesentlichen die Hauptöffnung vollständig abschließt, wenn er sich in dem angeordneten Zustand befindet, **dadurch gekennzeichnet, dass** die Betondose (1) mit einem ersten Verschlusselement (31) versehen ist, das bezogen auf das Gehäuse (2) zwischen einer ersten Position und einer zweiten Position bewegt werden kann, wobei das erste Verschlusselement (31) in der ersten Position eine verschiebende Anwendungsbewegung des Gehäuses (2) bezüglich des Deckels (4) parallel zur Dosenmittellinie (S) ermöglicht, und wobei das erste Verschlusselement (31) in der zweiten Position das Gehäuse (2) mit dem Deckel (4) koppelt und das Gehäuse (2) bezüglich des Deckels (4) gegen eine Verschiebung parallel zur Dosenmittellinie (S) sichert, wobei das Verfahren die Schritte des Anordnens von Schalungswänden zur Bildung einer Gießform für die Gießbetonwand, den Gießbetonboden oder die Gießbetondecke, des Sicherns des Deckels (4) gegen eine der Schalungswände, des Anordnens des Gehäuses (2) auf dem Deckel (4) in einer Richtung parallel zur Dosenmittellinie (S), um sich zu verbinden, des Drehens des ersten Verschlusselements (31) aus der ersten Position in die zweite Position und dadurch das Erreichen der Kopplung zwischen dem Gehäuse (2) und dem Deckel (4) und das Gießen des Betons aufweist.

14. Verfahren nach Anspruch 13, wobei die Betondose (1) mit einem zweiten Verschlusselement (32) mit denselben Eigenschaften wie das erste Verschlusselement (31) versehen ist, wobei das zweite Verschlusselement (32) bezüglich der Umfangswand (21) diametral gegenüber dem ersten Verschlusselement (31) angeordnet ist, wobei das Verfahren vor dem Schritt des Gießens des Betons des Weiteren den Schritt des Drehens des zweiten Verschlusselements (32) aus der ersten Position in die zweite Position und dadurch das Erreichen einer zusätzlichen Kopplung zwischen dem Gehäuse (2) und dem Deckel (4) aufweist.

15. Verfahren nach Anspruch 13 oder 14, wobei die Betondose (1) mit einer vorbestimmten Bruchverbindung an dem Ort der Kopplung zwischen dem Gehäuse (2) und dem Deckel (4) versehen ist, wobei das Verfahren weiterhin die Schritte des Entfernens der Schalungswände, des Ausübens von ausreichender Kraft auf die vorbestimmte Sollbruchverbindung, um sie zu aufzubrechen, wobei die Kopplung zwischen dem Gehäuse (2) und dem Deckel (4) beendet wird, und des Entfernens des Deckels (4) aufweist.

## Revendications

1. Boîte de coulée (1) destinée à constituer un câblage électrique, comprenant un logement (2) et un couvercle (4) qui, à l'état mis en place, est raccordé au logement (2), dans laquelle le logement (2) comprend une paroi inférieure (20) et une paroi circonférentielle (21) qui monte depuis la paroi inférieure (20) et a un axe (S) de boîte, dans laquelle la paroi inférieure (20) et la paroi circonférentielle (21) délimitent conjointement un espace d'installation (H) destiné à accueillir du matériel d'installation, dans laquelle la paroi circonférentielle (21) comprend un bord d'installation circulaire (22) qui est tourné à l'opposé de la paroi inférieure (20) et délimite une ouverture primaire du logement (2), dans laquelle le couvercle (4) a une forme complémentaire de celle de l'ouverture primaire et ferme pratiquement totalement l'ouverture primaire lorsqu'il est dans l'état mis en place, **caractérisée en ce que** la boîte de coulée (1) est pourvue d'un premier élément de blocage (31) qui, par rapport au logement (2), peut être déplacé entre une première position et une seconde position, dans laquelle le premier élément de blocage (31), dans la première position, permet un mouvement d'application de déplacement du logement (2) par rapport au couvercle (4) parallèlement à l'axe (S) de boîte et dans laquelle le premier élément de blocage (31), dans la seconde position, accouple le logement (2) au couvercle (4) et immobilise le logement (2) par rapport au couvercle (4) pour empêcher un déplacement parallèle à l'axe (S) de boîte.

2. Boîte de coulée (1) selon la revendication 1, dans laquelle le mouvement du premier élément de blocage (31) entre la première position et la seconde position est un mouvement rotatif, dans laquelle, de préférence, l'axe de rotation (R) du mouvement rotatif s'étend parallèlement à la paroi inférieure (20) du logement (2).

3. Boîte de coulée (1) selon la revendication 2, dans laquelle le mouvement rotatif est réalisé par un raccord rotatif situé dans l'axe de rotation (R), dans laquelle, de préférence, le raccord rotatif est un raccord en plastique souple, de préférence une charnière active (25).

4. Boîte de coulée (1) selon la revendication 3, dans laquelle le raccord rotatif raccorde le logement (2) et le premier élément de blocage (31) l'un à l'autre, dans laquelle, de préférence, le premier élément de blocage (31) est raccordé au logement (2) par le raccord rotatif à l'extérieur de la paroi circonférentielle (21).

5. Boîte de coulée (1) selon l'une quelconque des revendications précédentes, dans laquelle le premier élément de blocage (31), dans la première position, est espacé du couvercle (4).

6. Boîte de coulée (1) selon l'une quelconque des revendications précédentes, dans laquelle le couvercle (4) est pourvu d'un premier rebord de blocage (51), dans laquelle le premier élément de blocage (31) est pourvu d'une première ouverture de blocage (33) qui, dans la seconde position du premier élément de blocage (31), accueille le premier rebord de blocage (51), dans laquelle, de préférence, considéré parallèlement à l'axe (S) de boîte, le premier rebord de blocage (51) s'étend au-delà de la circonférence de la paroi circonférentielle (21), dans laquelle, de préférence, considérée parallèlement à l'axe (S) de boîte, la première ouverture de blocage (33) enferme le premier rebord de blocage (51).

7. Boîte de coulée (1) selon la revendication 6, dans laquelle le premier rebord de blocage (51) est pourvu d'une première came de blocage (53) qui, considérée depuis la paroi circonférentielle (21), dans la seconde position du premier élément de blocage (31) s'accroche derrière le premier élément de blocage (31).

8. Boîte de coulée (1) selon l'une quelconque des revendications précédentes, dans laquelle, lorsque le logement (2) est accouplé au couvercle (4) par le premier élément de blocage (31), le couvercle (4) ferme sensiblement l'ouverture primaire du logement (2).

9. Boîte de coulée (1) selon l'une quelconque des revendications précédentes, dans laquelle la boîte de coulée (1) est pourvue d'un raccord de rupture prédéfini à l'emplacement de l'accouplement entre le logement (2) et le couvercle (4).

10. Boîte de coulée (1) selon l'une quelconque des revendications précédentes, dans laquelle la boîte de coulée (1) est pourvue d'un second élément de blocage (32) présentant les mêmes caractéristiques que le premier élément de blocage (31), dans laquelle, par rapport à la paroi circonférentielle (21), le second élément de blocage (32) se situe diamétralement opposé au premier élément de blocage (31).

11. Boîte de coulée (1) selon l'une quelconque des revendications 6 à 9 en association avec la revendication 10, dans laquelle le couvercle (4) est pourvu d'un second rebord de blocage (52) présentant les mêmes caractéristiques que le premier rebord de blocage (51), dans laquelle, par rapport à la paroi circonférentielle (21), le second rebord de blocage (52) se situe diamétralement opposé au premier rebord de blocage (51).

12. Boîte de coulée (1) selon l'une quelconque des revendications précédentes, dans laquelle le couvercle (4) est pourvu d'emplacements de fixation (44) destinés à fixer le couvercle (4) à une paroi d'obturation.

13. Procédé d'accueil d'une boîte de coulée (1) dans une paroi de coulée, un plancher de coulée ou un plafond de coulée pour constituer un câblage électrique, dans lequel la boîte de coulée (1) comprend un logement (2) et un couvercle (4) qui, à l'état mis en place, est raccordé au logement (2), dans lequel le logement (2) comprend une paroi inférieure (20) et une paroi circonférentielle (21) qui monte depuis la paroi inférieure (20) et a un axe (S) de boîte, dans lequel la paroi inférieure (20) et la paroi circonférentielle (21) délimitent conjointement un espace d'installation destiné à accueillir du matériel d'installation, dans lequel la paroi circonférentielle (21) comprend un bord d'installation circulaire (22) qui est tourné à l'opposé de la paroi inférieure (20) et délimite une ouverture primaire du logement (2), dans laquelle le couvercle (4) a une forme complémentaire de celle de l'ouverture primaire et ferme pratiquement totalement l'ouverture primaire lorsqu'il est dans l'état mis en place, **caractérisé en ce que** la boîte de coulée (1) est pourvue d'un premier élément de blocage (31) qui, par rapport au logement (2), peut être déplacé entre une première position et une seconde position, dans laquelle le premier élément de blocage (31), dans la première position, permet un mouvement d'application de déplacement du logement (2) par rapport au couvercle (4) parallèlement à l'axe (S) de boîte et dans lequel le premier élément de blocage (31), dans la seconde position, accouple le logement (2) au couvercle (4) et immobilise le logement (2) par rapport au couvercle (4) pour empêcher un déplacement parallèle à l'axe (S) de boîte, dans lequel le procédé comprend les étapes consistant à placer des parois d'obturation pour former un moule de coulée pour la paroi de coulée, le plancher de coulée ou le plafond de coulée, à immobiliser le couvercle (4) contre l'une des parois d'obturation, à placer le logement (2) sur le couvercle (4) dans une direction parallèle à l'axe (S) de boîte de manière à raccorder, à faire tourner le premier élément de blocage (31) de la première position à la seconde position et à réaliser ainsi l'accouplement entre le logement (2) et le couvercle (4), et à faire couler le béton.

14. Procédé selon la revendication 13, dans lequel la boîte de coulée (1) est pourvue d'un second élément de blocage (32) présentant les mêmes caractéristiques que le premier élément de blocage (31), dans lequel, par rapport à la paroi circonférentielle (21), le second élément de blocage (32) se situe diamétralement opposé au premier élément de blocage (31), dans lequel le procédé, avant l'étape de coulée du béton comprend en outre l'étape consistant à faire tourner le second élément de blocage (32) de la première position à la seconde position et à réaliser ainsi un accouplement supplémentaire entre le logement (2) et le couvercle (4).

15. Procédé selon la revendication 13 ou 14, dans lequel la boîte de coulée (1) est pourvue d'un raccord de rupture prédéfini à l'emplacement de l'accouplement (2) et du couvercle (4), dans lequel le procédé comprend en outre les étapes consistant à retirer les parois d'obturation, à exercer une force suffisante sur le raccord de rupture prédéfini afin qu'il rompe, l'accouplement entre le logement (2) et le couvercle (4) prenant fin, et à retirer le couvercle (4).
